# EUROPÄISCHE PATENTSCHRIFT

(11) **EP 1 755 831 B1**
(45) Veröffentlichungstag und Bekanntmachung des Hinweises auf die Patenterteilung: **07.05.2008**
(21) Anmeldenummer: 05744704.7
(22) Anmeldetag: 29.04.2005
(51) Int. Cl.: B25B 29/02, B23P 19/06, F16K 17/10

(54) **SCHALTEINRICHTUNG FÜR EIN HYDRAULISCHES HOCHDRUCKSYSTEM**
SWITCHING DEVICE FOR A HYDRAULIC HIGH-PRESSURE SYSTEM
DISPOSITIF DE COMMANDE POUR UN SYSTEME HYDRAULIQUE HAUTE PRESSION

(30) Priorität: 04.06.2004 DE 102004027413
(43) Veröffentlichungstag der Anmeldung: 28.02.2007
(73) Patentinhaber: Hohmann, Jörg, 59872 Meschede (DE)
(72) Erfinder: HOHMANN, Jörg, 59872 Meschede (DE); HOHMANN, Frank, 59851 Warstein (DE)
(74) Vertreter: Christophersen & Partner
(86) Internationale Anmeldenummer: PCT/EP2005/004628
(87) Internationale Veröffentlichungsnummer: WO 2005/118225

(56) Entgegenhaltungen:
- DE-A1- 2 202 959
- DE-A1- 3 312 788
- US-A- 833 062
- US-A- 1 511 300
- US-A- 3 814 375
- US-A- 5 398 719
- US-B1- 6 293 765

## Beschreibung

Die Erfindung betrifft die Verwendung einer Schalteinrichtung für ein hydraulisches Hochdrucksystem zum Betreiben von Hydraulik-Schraubenspannvorrichtungen.

Hydraulische Hochdrucksysteme werden in viele Bereichen der Industrie zu unterschiedlichen Zwecken eingesetzt. Ein Bereich des Einsatzes ist das Betreiben unterschiedlicher Werkzeuge. Diese Werkzeuge sollen möglichst klein und handhabbar sein, sowie sehr hohe Kräfte aufbringen können. Hydraulik-Schraubenspannvorrichtungen sind beispielsweise derartige Werkzeuge. Auf Grund des gewünschten geringen Bauvolumens ist es erforderlich, zum Erzielen der benötigten Kräfte den Druck im Hochdrucksystem entsprechend hoch zu wählen. Die hierfür verwendeten Pumpen liefern Druck zwischen 700 und 3.000 bar. Bisher am Markt verfügbare Ventile zum Steuern von Drücken über 1.000 bar sind als Handabsperrventile ausgebildet, während für Drücke bis zu 1.000 bar durch Elektromagnete direkt betätigte Wegesitzventil bekannt sind.

Handabsperrventile lassen sich, wie die Bezeichnung aussagt, nicht fernsteuern; während die direkt betätigten Magnetventile auf Grund der großen benötigten Kräfte zum Öffnen oder Schließen sehr groß und schwer bauen und dennoch für einen Druck über 1.000 bar nicht geeignet sind.

In der WO-A-97/042062 ist ein vorgesteuertes Hydraulik-Schließventil mit einer in einem Ventilgehäuse sacklochförmigen Steuerbohrung, in die am geschlossenen Ende der Steuerbohrung ein Zulaufanschluss A und in einem Abstand zum Zulaufanschluss A ein Ablaufanschluss B münden, mit einem konzentrisch in der Steuerbohrung zwischen den Anschlüssen A und B ausgebildeten Ventilsitz, der eine Dichtfläche mit einem Sitzquerschnitt F 1 aufweist, mit einem Steuerkolben, der an einem Ende einen Endbund mit einer Dichtfläche aufweist, die mit der Dichtfläche des Ventilsitzes zusammenwirkt, wobei der Endbund durch einen Kolbenschaft mit einem Mittelbund verbunden ist, der die Steuerbohrung an dem Anschluss B benachbarten Ende absperrt und im Ventilgehäuse dichtend geführt ist, beschrieben, bei dem der Kolbenschaft den Ventilsitz durchdringt, die Dichtfläche des Endbundes dem Mittelbund gegenüber liegt und die Dichtfläche des Ventilsitzes zu dem Zulauf des Anschlusses A gewandt ist, so dass der Steuerkolben und der Ventilsitz mit Schließsinn in Richtung A nach B zusammenwirken. Der Steuerkolben ist am Ende des Mittelbundes mit einem Vorsteuerbund verbunden, der im Ventilgehäuse in einer Vorsteuerbohrung dichtend geführt wird, wobei die Vorsteuerbohrung an einem Ende konzentrisch mit der Steuerbohrung verbunden ist, und an einem gegenüberliegenden Ende mit einem Deckel verschlossen ist, und wobei eine zwischen dem Vorsteuerbund und dem Deckel gebildete Vorsteuerkammer mit einem Druckmedium mittels einer hydraulisch, pneumatisch oder elektromagnet-hydaraulisch betätigten Vorsteuereinrichtung beaufschlagbar ist.

Der Erfindung liegt die Aufgabe zu Grunde, eine Schalteinrichtung für ein hydraulisches Hochdrucksystem zum Betreiben von Hydraulik-Spannvorrichtungen zu schaffen, die ein geringes Bauvolumen aufweist und für eine Fernsteuerung bei Drücken .über 1.000 bis 3.000 bar und mehr geeignet ist.

Ausgehend von dieser Aufgabenstellung wird die Verwendung einer Schalteinrichtung für ein hydraulisches Hochdrucksystem zum Betreiben von Hydraulik-Schraubenspannvorrichtungen gemäß Anspruch 1 vorgeschlagen.

Da das Schaltventil nur den Niederdruck für den Steuerkolben steuert, lässt es sich als einfaches Magnetventil ausbilden, das sich über Kabel oder über Funk fernsteuern lässt Der durch Niederdruck gesteuert beaufschlagbare Steuerkolben lässt sich im Durchmesser so groß ausbilden, dass er in der Lage ist, das mit Hochdruck beaufschlagte Wegesitzventil zu öffnen, wobei' sich die Anordnung dennoch raumsparend und leicht im Gewicht ausbilden lässt.

Besonders raumsparend lässt sich die Schalteinrichtung anordnen, wenn das Wegesitzventil aus einem Ventilblock mit einem mit einer Hochdruckleitung verbundenen Hochdruckraum und einem eine drucklose Rückströmleitung unter Hochdruckbeaufschlagung verschließenden Ventilkegel besteht, wobei der Steuerkolben im.Ventilblock koaxial zum Ventilkegel angeordnet ist.

Der Ventilkegel kann auf einem durch eine Durchmesserverringerung des zylindrischen Hochdruckraums gebildeten Ventilsitz ruhen, während der Ventilstößel am Ventilkegel durch eine der Durchmesserverringerung entsprechende Bohrung geführt ist, der durch den Steuerkolben beaufschlagt ist, wobei von der Bohrung die Rückströmleitung abgeht.

Vorzugsweise lässt sich das Schaltventil in der Niederdruckrückströmleitung anordnen.

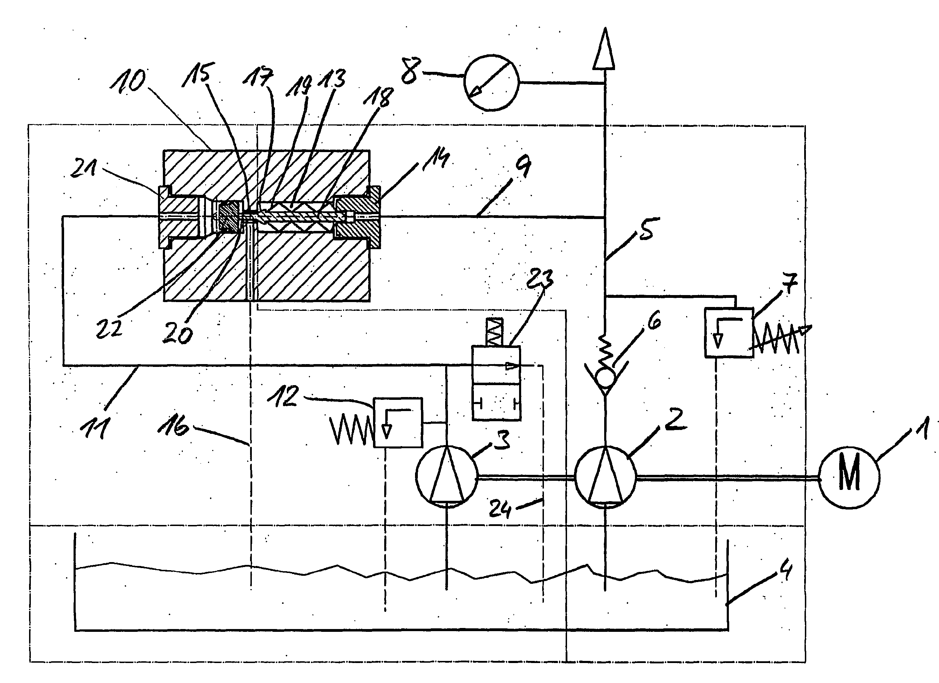

Die Erfindung wird nachstehend anhand eines in der Zeichnung dargestellten Ausführungsbeispiels des Näheren erläutert.

Ein Antriebsmotor 1, im Allgemeinen ein Elektromotor, treibt eine Hochdruckpumpe 2 und eine damit gekuppelte Niederdruckpumpe 3 an. Beide Pumpen 2, 3 entnehmen Hydraulikflüssigkeit aus einem Tank 4. Die Hochdruckpumpe 2 fördert über ein Rückschlagventil 6 in eine Hochdruckleitung 5 in der der Druck mittels eines einstellbaren Druckventils 7 auf einen Druck bis zu 3.000 bar einstellbar ist. Der in der Hochdruckleitung 5 herrschende Druck lässt sich an einer Druckmessvorrichtung 8 ablesen. In der Hochdruckleitung 5 herrscht nur so lange der hohe Druck, so lange eine Abzweigleitung 9 nicht mit einer drucklosen Hochdruckrückströmleitung 16, die zum Tank 4 zurückführt, verbunden ist. Die Druckentlastung der Hochdruckleitung 5 wird durch einen in einem Ventilblock 10 angeordneten Ventilkegel 17 bewirkt. Dieser Ventilkegel 17 ist in einem Hochdruckraum 13 des Ventilblocks 10 angeordnet und über die mit einem Stopfen 14 verbundene Abzweigleitung 9 mit Hochdruck beaufschlagt. Der Ventilkegel 17 ist mittels eines Führungsschafts 18 geführt und in Schließrichtung durch den Druck in der Hochdruckleitung 5 und der Abzweigleitung 9 sowie einer Feder 19 beaufschlagt. Der Ventilkegel 17 ruht auf einem Absatz, der durch eine zum zylindrischen Hochdruckraum 13 koaxiale, durchmesserverringerte Bohrung 15 gebildet wird. Von der Bohrung 15 zweigt die drucklose Hochdruckrückströmleitung 16 ab und ist zum Tank 4 zurückgeführt.

Durch die Bohrung 15 ragt ein mit dem Ventilkegel 17 verbundener Ventilstößel 20, der durch einen koaxial zur Bohrung 15 und dem Ventilkegel 17 angeordneten Steuerkolben 22 beaufschlagt ist. Der Steuerkolben 22 ist in einer entsprechenden Bohrung im Ventilblock 10 abgedichtet geführt und lässt sich auf der dem Ventilkegel 17 abgewandten Seite über eine Niederdruckleitung 11 und eine Bohrung in einem Stopfen 21 mit von der Niederdruckpumpe 3 geliefertem Niederdruck beaufschlagen.

Der Druck in der Niederdruckleitung 11 wird mittels eines Druckventils 12 auf einen Druck geregelt, der so eingestellt ist, dass der Steuerkolben 22, der einen größeren Durchmesser als die Bohrung 15 aufweist, in der Lage ist, den Ventilkegel 17 gegen den Hochdruck im Hochdruckraum 13 in Öffnungsrichtung zu verschieben. Dies wird dadurch bewirkt, dass ein in einer Niederdruckrückströmleitung 24 angeordnetes mit der Niederdruckleitung 11 verbundenes Magnetventil 23 aus der dargestellten, geöffneten Stellung, in der die von der Niederdruckpumpe 3 gelieferte Hydraulikflüssigkeit über die Niederdruckrückströmleitung 24 direkt wieder in den Tank 4 zurückfließt, geschlossen wird, wodurch sich der durch das Druckventil 12 eingestellte Druck in der Niederdruckleitung 11 aufbaut, den Steuerkolben 22 verschiebt und dadurch den Ventilstößel 20 ebenfalls verschiebt, wodurch der Ventilkegel 17 von seinem Sitz abgehoben wird und die Verbindung zwischen der Hochdruckleitung 5 und der drucklosen Hochdruckrückströmleitung 16 hergestellt wird.

Zur Betätigung des Magnetventils 23 sind nur geringe Kräfte erforderlich, so dass dieses Magnetventil 23 sehr klein baut. Ebenso lässt sich der Ventilblock 10 mit geringen Abmessungen ausführen, da er nur den Steuerkolben 22 und den Ventilkegel 17 mit seinem Führungsschaft 18 und dem Ventilstößel 20 aufzunehmen braucht.

Wegen der geringen, für die Betätigung des Magnetventils 23 erforderlichen Kräfte, ist eine problemlose Fernsteuerung mittels Kabel oder Funk möglich, so dass zum Betreiben einer Hydraulik-Schraubenspannvorrichtung nur eine Person erforderlich ist, während bisher zwei Bedienungspersonen vorhanden sein mussten, wovon die eine die Hydraulik-Schraubenspannvorrichtung bediente und die andere das Handabsperrventil an der Hochdruckhydraulikpumpe bedienen musste.

## Patentansprüche

1. Verwendung einer Schalteinrichtung für ein hydraulisches Hochdrucksystem zum Betreiben von Hydraulik-Schraubenspannvorrichtungen, mit
- einem in Schließrichtung durch Hochdruck von einer Hochdruckpumpe (2) beaufschlagten Wegesitzventil (10, 17) mit einem mit einer Hochdruckleitung (5) verbundenen Hochdruckraum (13), das unter Hochdruckbeaufschlagung eine drucklose Hochdruckrückströmleitung (16) verschließt,
- einem das Wegesitzventil (10, 17) zum Herstellen einer Verbindung zwischen der Hochdruckleitung (5) und der Hochdruckrückströmleitung (16) in Öffnungsrichtung verschiebenden Steuerkolben (22), wenn dieser durch Niederdruck von einer Niederdruckpumpe (3) gesteuert beaufschlagt wird,
- einem eine Verbindung zu einer drucklosen Niederdruckrückströmleitung (24) walweise herstellenden oder unterbrechenden, willkürlich steuerbare Schaltventil (23), das bei Unterbrechung der Verbindung mit der Niederdruckrückströmleitung (24) die Niederdruckbeaufschlagung des Steuerkolbens (22) mit Niederdruck von der Niederdruckpumpe (3) und dadurch die Verschiebung des Wegesitzventils (10, 17) in Öffnungsrichtung bewirkt und
- einem Motor (1), der die Hochdruckpumpe (2) und die damit gekuppelte Niederdruckpumpe (3) für den Niederdrucksteuerkreis antreibt.

2. Verwendung der Schalteinrichtung nach Anspruch 1, bei der das Wegesitzventil aus einem Ventilblock (10) mit einem mit einer Hochdruckleitung (5) verbundenen Hochdruckraum (13) und einem eine drucklose Hochdruckrückströmleitung (16) unter Hochdruckbeaufschlagung verschließenden Ventilkegel (17) besteht, wobei der Steuerkolben (22) im Ventilblock (10) koaxial zum Ventilkegel (17) angeordnet ist.

3. Verwendung der Schalteinrichtung nach Anspruch 2, bei der der Ventilkegel (17) auf einem durch eine Durchmesserverringerung des zylindrischen Hochdruckraums (13) gebildeten Ventilsitz ruht, durch eine, der Durchmesserverringerung entsprechende Bohrung (15), ein Ventilstößel (20) am Ventilkegel (17) geführt ist, der durch den Steuerkolben (22) beaufschlagt ist und von der Bohrung (15) die Hochdruckrückströmleitung (16) abgeht.

4. Verwendung der Schalteinrichtung nach einem der Ansprüche 1 bis 3, bei der das Schaltventil (23) ein fernsteuerbares Magnetventil ist.

5. Verwendung der Schalteinrichtung nach einem der Ansprüche 1 bis 4, bei der das Schaltventil (23) in der Niederdruckrückströmleitung (24) angeordnet ist.

## Claims

1. Use of a switching device for a hydraulic high-pressure system for operating hydraulic screw-tensioning devices, comprising
- a directional seat valve (10-17) which is acted upon in a closing direction by high pressure from a high-pressure pump (2) and has a high-pressure chamber (13) connected to a high-pressure line (5), which directional seat valve, when acted upon by high pressure, closes an unpressurised high-pressure return line (16),
- a control piston (22) which, when acted upon in a controlled manner by low pressure from a low-pressure pump (3), displaces the directional seat valve (10, 17) in the opening direction in order to establish a connection between the high-pressure line (5) and the high-pressure return line (16),
- a randomly controllable switching valve (23) which selectively establishes or breaks a connection to an unpressurised low-pressure return line (24) and which, when the connection to the low-pressure return line (24) is broken, causes the control piston (22) to be acted upon by low pressure from the low-pressure pump (3) and thus causes the displacement of the directional seat valve (10, 17) in the opening direction, and
- a motor (1) which drives the high-pressure pump (2) and the low-pressure pump (3) coupled thereto for the low-pressure control circuit.

2. Use of the switching device according to claim 1, in which the directional seat valve consists of a valve block (10) with a high-pressure chamber (13) connected to a high-pressure line (5) and of a valve cone (17) which closes an unpressurised high-pressure return line (17) when acted upon by high pressure, wherein the control piston (22) is arranged in the valve block (10) coaxially with respect to the valve cone (17).

3. Use of the switching device according to claim 2, in which the valve cone (17) rests on a valve seat formed by a reduction in diameter of the cylindrical high-pressure chamber (13), a valve tappet (20) on the valve cone (17) is guided through a bore (15) corresponding to the reduction in diameter and is acted upon by the control piston (22), and the high-pressure return line (16) branches off from the bore (15).

4. Use of the switching device according to one of claims 1 to 3, in which the switching valve (23) is a remotely controllable solenoid valve.

5. Use of the switching device according to one of claims 1 to 4, in which the switching valve (23) is arranged in the low-pressure return line (24).

## Revendications

1. Utilisation d'un dispositif de commutation pour un système à haute pression hydraulique pour l'exploitation de dispositifs de serrage de vis hydrauliques, comprenant
- une vanne de distribution à siège (10, 17) sollicitée dans le sens de fermeture par de la haute pression provenant d'une pompe à haute pression (2) avec une chambre haute pression (13) reliée à une conduite à haute pression (5), qui ferme une conduite de retour à haute pression (16) sans pression par sollicitation de haute pression,
- un piston de commande (22) déplaçant la vanne de distribution à siège (10, 17) pour l'établissement d'une liaison entre la conduite à haute pression (5) et la conduite de retour à haute pression (16) dans le sens de l'ouverture, lorsque ce piston est sollicité et commandé par de la basse pression provenant d'une pompe basse pression (3),
- une vanne de commutation (23) qui établit ou interrompt au choix une liaison avec une conduite de retour à basse pression (24) sans pression, contrôlable volontairement, laquelle, en cas d'interruption de la liaison avec la conduite de retour à basse pression (24), entraîne la sollicitation par basse pression du piston de commande (22) avec de la basse pression par la pompe à basse pression (3) et de ce fait le déplacement de la vanne de distribution à siège (10, 17) dans le sens de l'ouverture et
- un moteur (1), qui entraîne la pompe à haute pression (2) et la pompe à basse pression (3) couplée à la première pour le circuit de commande de basse pression.

2. Utilisation du dispositif de commutation selon la revendication 1, dans laquelle la vanne de distribution à siège comprend un bloc de soupape (10) avec une chambre haute pression (13) reliée à une conduite à haute pression (5) et un cône de soupape (17) fermant une conduite de retour à haute pression (16) sans pression par sollicitation de haute pression, le piston de commande (22) étant disposé dans le bloc de soupape (10) sur le même axe que le cône de soupape (17).

3. Utilisation du dispositif de commutation selon la revendication 2, dans laquelle le cône de soupape (17) repose sur un siège de soupape formé par une réduction de diamètre de la chambre haute pression (13) cylindrique, par un alésage (15) adapté à la réduction du diamètre, un poussoir de soupape (20) étant guidé sur le cône de soupape (17), lequel est sollicité par le piston de commande (22) et la conduite de retour à haute pression (16) partant de l'alésage (15).

4. Utilisation du dispositif de commutation selon l'une des revendications 1 à 3, dans laquelle la vanne de commutation (23) est une électrovanne télécommandable.

5. Utilisation du dispositif de commutation selon l'une des revendications 1 à 4, dans laquelle la vanne de commutation (23) est disposée dans la conduite de retour à basse pression (24).
